# EUROPEAN PATENT SPECIFICATION

(11) **EP 2 157 597 B1**
(45) Date of publication and mention of the grant of the patent: **06.07.2011**
(21) Application number: 09168085.0
(22) Date of filing: 18.08.2009
(51) Int. Cl.: H01J 17/16, H01J 17/49

(54) **Filter for plasma display panel and plasma display apparatus having the filter**
Filter für eine Plasmaanzeigetafel und Plasmaanzeigevorrichtung mit dem Filter
Filtre pour panneau d'affichage à plasma et appareil d'affichage à plasma doté du filtre

(30) Priority: 19.08.2008 KR 20080081067
(43) Date of publication of application: 24.02.2010
(73) Proprietor: Samsung SDI Co., Ltd., Gyeonggi-do (KR)
(72) Inventor: Moon, Dong-Gun, Gyeonggi-do (KR); Shim, Myun-Gi, Gyeonggi-do (KR); Hur, Sang-Yeol, Gyeonggi-do (KR)
(74) Representative: Gulde Hengelhaupt Ziebig & Schneider

(56) References cited:
- EP-A- 1 677 336
- EP-A- 1 770 750
- EP-A- 1 956 629
- EP-A- 2 019 411
- EP-A- 2 068 341
- WO-A-2008/026870
- US-A1- 2005 186 421
- US-A1- 2006 250 064

## Description

### BACKGROUND OF THE INVENTION

### Field of the Invention

An aspect of the present invention relates to a filter for a plasma display panel and a plasma display apparatus having the filter.

### Description of the Related Art

A plasma display apparatus is a flat panel display apparatus that includes a plasma display panel (PDP) and displays an image via a gas discharge. Due to their high brightness and contrast, low burning image, wide viewing angle, and a large and slim screen size, plasma display apparatuses are expected to become one of the next generations of large flat panel display apparatuses.

PDPs generally have a dark room contrast higher than that of LCDs. However, PDPs have a bright room contrast lower than that of LCDs in the presence of external light since PDPs have high reflectance due to the reflection of a phosphor material or barrier ribs formed within the PDP.

Examples of filters for plasma display panels according to the preamble of claim 1 are disclosed in EP-A-1 677 336 and US-A-2006 250 064.

### SUMMARY OF THE INVENTION

An aspect of the present invention provides a filter for a plasma display panel (PDP) that may prevent moiré patterns from occurring and a plasma display apparatus having the filter.

According to the present invention, a filter for a plasma display panel as set out in claim 1 is provided.

The filter may have an aperture ratio no less than about 50 %.

The plurality of pattern portions may have a pitch of about 30 µm to about 120 µm.

The pattern portions may be disposed at the same intervals from each other.

The plurality of pattern portions may be disposed extending parallel to the first barrier ribs. Preferably none of the plurality of pattern portions overlaps one of the first barrier ribs.

The plurality of pattern portions may extend to perpendicularly cross the second barrier ribs.

The plurality of pattern portions may be a plurality of light absorption pattern portions. The plurality of pattern portions are formed of a material capable of absorbing visible light. The material of the pattern portions include a black material that absorbs visible light. The amount of black material is in a range of about 0.1 wt% to about 10 wt% with respect to 100 wt% of the material of the pattern portions.

The filter may further include an adhesive layer disposed on a lower surface of the base film to attach the base film to the plasma display panel. The adhesive layer may include a dye or a pigment.

The base film may be attached to a front surface of the plasma display panel, through which light is emitted.

The filter may further include a near infrared ray blocking layer on a surface of the filter. The filter may further include a color correction layer on a surface of the filter. The filter may further include a conductive layer on a surface thereof for blocking electromagnetic waves.

The plurality of first barrier ribs may be a plurality of horizontal barrier ribs. The plurality of second barrier ribs may be a plurality of vertical barrier ribs.

According to another aspect of the present invention, there is provided a plasma display apparatus including a plasma display panel that displays an image, a driving circuit substrate that controls the supply of driving signals and power to the plasma display panel, a chassis that supports the plasma display panel and the driving circuit substrate, and a filter according to claim 1 that is attached to a front surface of the plasma display panel.

The chassis may be disposed between a rear surface of the plasma display panel and the driving circuit substrate.

### BRIEF DESCRIPTION OF THE DRAWINGS

A more complete appreciation of the invention and many of the attendant advantages thereof will be readily apparent as the same becomes better understood by reference to the following detailed description when considered in conjunction with the accompanying drawings in which like reference symbols indicate the same or similar components, wherein:
FIG. 1 is an exploded perspective view of a plasma display panel (PDP) having a filter, according to an embodiment of the present invention;
FIG. 2 is a cross-sectional view taken along line I-I of FIG. 1, according to an embodiment of the present invention;
FIG. 3 is a plan view showing the arrangement of pattern portions, discharge electrodes, a barrier rib structure, and discharge cells of the PDP of FIG. 1, according to an embodiment of the present invention;
FIG. 4 is an exploded perspective view of a plasma display apparatus having a filter, according to an embodiment of the present invention; and
FIG. 5 is a cross-sectional view taken along line IV-IV of FIG. 4, according to an embodiment of the present invention.

### DETAILED DESCRIPTION OF THE INVENTION

The present invention will now be described more fully with reference to the accompanying drawings, in which exemplary embodiments of the invention are shown.

The scope of the invention is only defined by the appended claims and any example not being an embodiment of the invention thus defined should be regarded only for illustrating purposes.

In the drawings, the thicknesses of layers and regions are exaggerated for clarity. Like reference numerals in the drawings denote like elements.

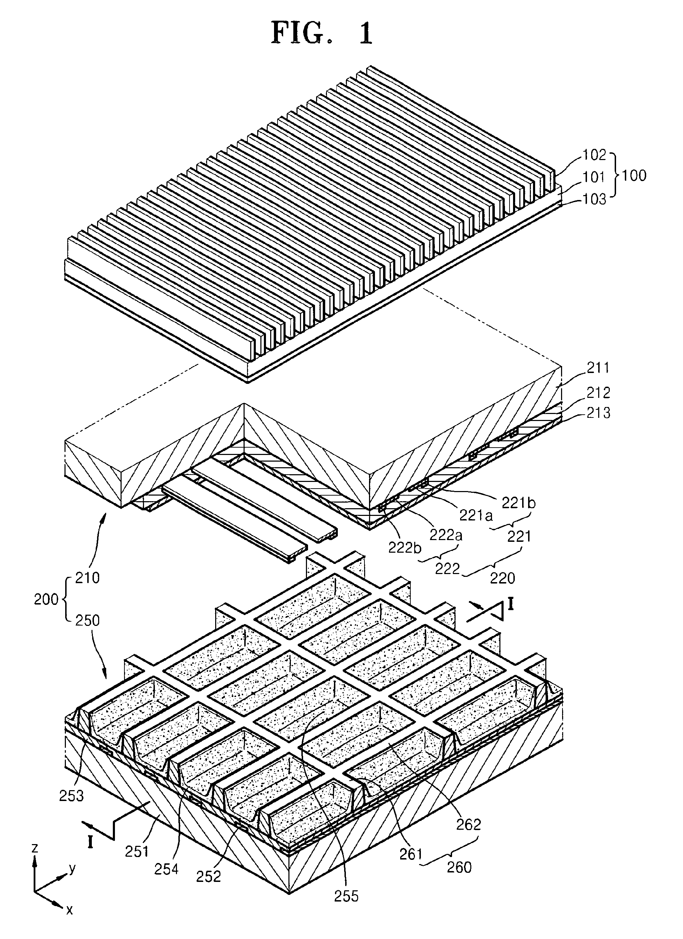

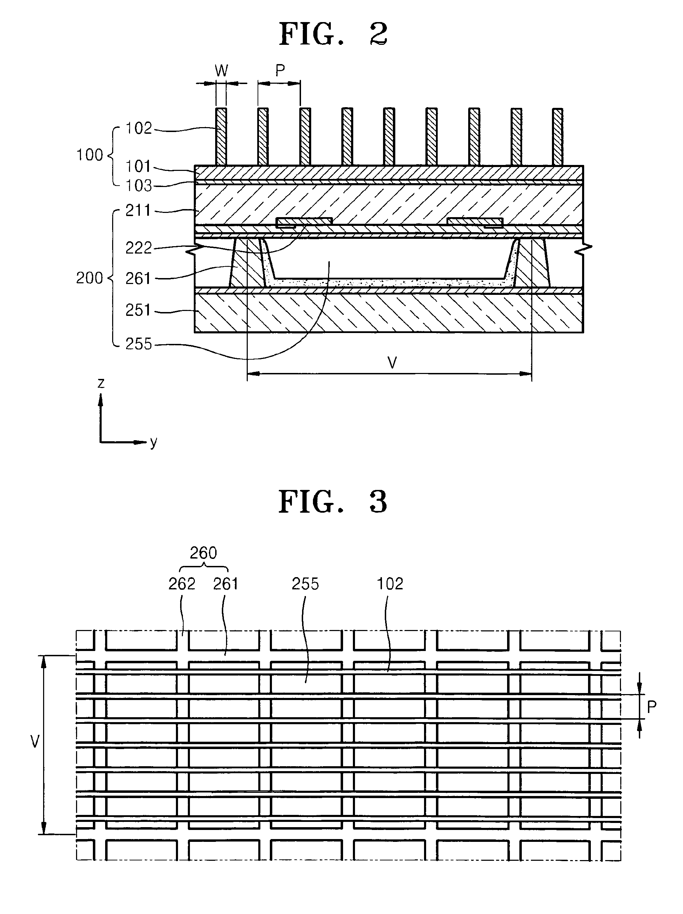

FIG. 1 is an exploded perspective view of a plasma display panel (PDP) 200 having a filter 100, according to an embodiment of the present invention. FIG. 2 is a cross-sectional view taken along line I-I of FIG. 1, and FIG. 3 is a plan view showing the arrangement of pattern portions 102, a barrier rib structure 260, and discharge cells 255 of the PDP of FIG. 1, according to an embodiment of the present invention.

Referring to FIG. 1 and 2, the filter 100 according to an embodiment of the present invention is attached to a front surface of the PDP 200. The filter 100 includes a base film 101, the plurality of pattern portions 102, and an adhesive layer 103.

The PDP 200 includes a first panel 210 and a second panel 250, which face each other and are combined with each other. The first panel 210 includes a first substrate 211, discharge electrodes 220, a protective layer 213, and a first dielectric layer 212. The second panel 250 includes a second substrate 251, a second dielectric layer 253, a plurality of address electrodes 252, a barrier rib structure 260, and a phosphor layer 254. A discharge gas (not shown) is filled in a space between the first panel 210 and the second panel 250.

The first substrate 211 may be formed of glass having high visible light transmittance. However, the first substrate 211 may be colored to increase bright room contrast.

The second substrate 251 may be disposed to be separated by a predetermined distance from the first substrate 211 and may be formed of a material containing glass. The second substrate 251 may also be colored to increase bright room contrast.

The barrier rib structure 260 may be disposed between the first substrate 211 and the second substrate 251. More specifically, the barrier rib structure 260 may be disposed on the second dielectric layer 253. The barrier rib structure 260 partitions a discharge space into the plurality of discharge cells 255 and prevents optical and electrical cross-talk between the discharge cells 255.

Referring to FIG. 1, the barrier rib structure 260 defines the discharge cells 255 having a matrix shape with a rectangular horizontal cross-section. The barrier rib structure 260 includes a plurality of second barrier ribs 262 extending in a direction along a y direction in which the address electrodes 252 extend, and first barrier ribs 261 which extend in a direction different from the extending direction of the address electrodes 252 and perpendicularly cross the second barrier ribs 262. The first barrier ribs 261 may extend in an x direction perpendicular to the second barrier ribs 262. Accordingly, each of the discharge cells 255 is surrounded by a pair of the second barrier ribs 262 facing each other and a pair of the first barrier ribs 261 facing each other. The barrier rib structure 260 may have a closed loop structure. The first barrier ribs 261 may be horizontal barrier ribs and the second barrier ribs 262 may be vertical barrier ribs.

The barrier rib structure 260 having the above structure may be formed of a dielectric material. In this case, the barrier rib structure 260 may prevent a common electrode 222, a scan electrode 221, and the address electrodes 252 from being damaged by directly colliding with charges when a discharge occurs, and may facilitate the accumulation of wall charges by inducing charged particles. The barrier rib structure 260 may be formed of PbO, B₂O₃, or SiO₂, etc.

The discharge cells 255 defined by the barrier rib structure 260 are disposed between the first substrate 211 and the second substrate 251. An image is formed due to a discharge generated in the discharge cells 255.

The filter 100 that includes the base film 101, the pattern portions 102, and the adhesive layer 103 is attached to the front surface of the first substrate 211.

The base film 101 may be formed of a material that may transmit visible light and may be formed of a flexible material to be easily transported and attached. Also, the base film 101 allows the filter 100 to be attached to the front surface of the display apparatus. That is, the base film 101 may have interfacial properties for tightly contacting glass or plastic, and may be formed of a flexible material to be easily transported and attached.

More specifically, the base film 101 may be formed of a material selected from the group consisting of polyethersulphone (PES), polyacrylate (PAR), polyetherimide (PEI), polyethyelenen napthalate (PEN), polyethyeleneterepthalate (PET), polyphenylene sulfide (PPS), polyallylate, polyimide, polycarbonate (PC), cellulose tri-acetate (TAC), and cellulose acetate propinonate (CAP), and preferably, PC, PET, TAC, and PEN.

The base film 101 may be colored in a predetermined color. Accordingly, the transmittance of visible light of the filter 100 may be adjusted by controlling the color condition of the base film 101. For example, when the base film 101 is formed to have a dark color, the transmittance of visible light is reduced and the color of the visible light emitted to the front surface may be controlled. That is, the base film 101 may be colored so that the viewers have a good visual feeling, and to increase the color purity of the PDP 200 that employs the filter 100 according to an embodiment of the present invention. Also, the base film 101 may be color patterned corresponding to each of the discharge cells 255 of the PDP 200 that employs the filter according to an embodiment of the present invention. However, the base film 101 according to an embodiment of the present invention is not limited thereto, and may be colored in various ways for various color corrections.

The basle film 101 has a flat shape and may have a thickness of about 50 µm to about 500 µm. Preferably, the base film 101 may have a thickness about 80 µm to about 400 µm. If the thickness of the base film 101 is too thin, the scattering prevention effect of the base film 101 is reduced when the base film 101 is broken, and if the thickness of the base film 101 is too thick, the effect of a laminating process is reduced.

The plurality of pattern portions 102 are arranged on the base film 101. Referring to FIGS. 1 and 3, the pattern portions 102 are disposed on a surface of the base film 101, and extend in a direction crossing the second barrier ribs 262. The pattern portions 102 may be disposed extending in a direction perpendicular to the second barrier ribs 262. Also, the pattern portions 102 may be disposed extending parallel to the first barrier ribs 261.

As depicted in FIGS. 1 and 2, the pattern portions 102 may have a rectangular shape cross-section, but the present invention is not limited thereto. That is, the pattern portions 102 may have a polygonal cross-section such as a triangular or rhombic cross-section. The pattern portions 102 may have a color having low brightness and saturation, in particular, a black color to have a large absorption rate in visible light. The pattern portions 102 are light absorption pattern portions. The pattern portions 102 is formed of UV-curing materials with a black material added thereto. The UV-curing material may include, as a main component, about 45 wt% to about 55 wt% of polyurethane oligomer, about 30 wt% to about 40 wt% of methacrylate, about 1 wt% to about 3 wt% of acrylic acid, about 1 wt% to about 2.5 wt% of photoinitiator, and about 1 wt% to about 7.5 wt% of silica gel. The black material added to the UV-curing material may be at least one selected from the group consisting of TiO, CuO, NiO, MnO₂, Cr₂O₃, and Fe₂O₃. The amount of black material is in a range of about 0.1 wt% to about 10 wt% with respect to 100 wt% of the UV-curing material.

The pattern portions 102 reduce the reflection of external light entering into the PDP 200 from the outside by absorbing or scattering visible light entering to the front surface of the PDP 200. Thus, the pattern portions 102 increase the bright room contrast of the PDP 200.

However, if the pattern portions 102 overlap the first barrier ribs 261 of the barrier rib structure 260 or the discharge electrodes 220, the pattern portions 102 may cause moiré patterns, which are waveform interference patterns.

The moiré patterns occur when at least two structures of a pattern having a spatial periodicity overlap or one of the structures of the pattern projects to the other structure, and the moiré patterns are waveform interference patterns having a spatial periodicity greater than the original periodicity of the moiré patterns. The moiré patterns are a result of an intensity interference effect of a PDP that uses an incoherent light source.

In order to prevent the occurrence of the moiré patterns, the pattern portions 102 are formed to have a pitch P of about 15 % or less than a vertical length V of one of the discharge cells 255. As depicted in FIGS. 1 through 3, the vertical length V of the discharge cells 255 refers to a distance between two adjacent first barrier ribs 261 that form one discharge cell 255. More particularly, the vertical length V of the discharge cells 255 is the distance between a center portion of a first barrier rib and a center portion of the adjacent first barrier rib.

The filter 100 may be formed to have an aperture ratio of approximately 50 % or more. If the aperture ratio of the filter 100 is less than about 50 %, the brightness of the PDP 200 is relatively reduced, and thus, the aperture ratio may be approximately 50 % or more to increase the brightness.

A line width W of the pattern portions is determined by the aperture ratio of the filter 100 and the pitch P of the pattern portions 102. That is, if the pattern portions 102 have a smaller pitch, a larger number of pattern portions 102 is formed on the front surface of the PDP 200, and in this case, to maintain a predetermined aperture ratio, the line width W of the pattern portions 102 must be smaller.

When the aperture ratio of the filter 100 is approximately 50 % or above, the pattern portions 102 may have a pitch P of about 30 µm to about 120 µm. If the pattern portions 102 have a pitch P of about 30 µm or less, the pattern portions 102 are densely formed. In this case, it is not easy to manufacture the filter 100 since, in order to maintain the aperture ratio of the filter 100, the line width W of the pattern portions 102 must be very small. Also, if the pattern portions 102 have a pitch P of about 120 µm or above, the pattern portions 102 are sparsely formed. Accordingly, the blocking effect of visible light entering from the outside is reduced, thereby reducing the bright room contrast of the PDP 200.

Preferably, the aperture ratio of the filter 100 may be maintained in the range of about 70 % or greater, and thus the brightness of the PDP 200 may be increased. When the aperture ratio of the filter 100 is maintained at about 70 %, the pitch P of the pattern portions 102 may be about 100 µm, and the line width W of each pattern portion 102 may be about 30 µm.

A conductive layer (not shown) may be disposed on a surface of the base film 101. The conductive layer blocks electromagnetic waves, which are harmful to the human body, generated from the PDP 200. The conductive layer may be formed of various metals, such as Cu having good workability and high electrical conductivity.

The filter 100 may further selectively include a near infrared ray blocking layer (not shown) and/or a color correction layer (not shown). The color correction layer is used when color purity of visible light entering from the display apparatus including the filter 100 according to the present embodiment is low or when the correction of color, for example, a color temperature, is needed.

The adhesive layer 103 may be formed on a lower surface of the filter 100 according to the present embodiment to ensure the adhesiveness between the filter 100 and the surface of the PDP 200. The adhesive layer 103 may be formed to have a refractive index having a predetermined difference of, for example, not exceeding about 1.0 % from that of the PDP 200.

The adhesive layer 103 may include a thermoplastic resin or ultraviolet ray (UV) hardening resin, for example, acrylate resin or a pressure sensitive adhesive (PSA). The adhesive layer 103 may be formed using a dip coating method, an air knife method, a roller coating method, a wire bar coating method, or a gravure coating method.

The adhesive layer 103 may further include a compound that absorbs near infrared rays. The compound may be a resin that includes copper atoms, a resin that includes a copper compound or phosphor compound, a resin that includes a copper compound or a THIO urea derivative, a resin that includes a tungsten based compound, or a cyanine group compound.

The adhesive layer 103 may further include a coloring material such as a pigment or a dye to correct color by blocking neon light. The coloring material selectively absorbs light in a wavelength range of about 400 nm to about 700 nm. In particular, when a discharge is generated in the PDP 200, unnecessary visible light near a wavelength of approximately 585 nm is generated due a neon gas which is a discharge gas. In order to absorb the unnecessary visible light, a compound formed of such as a cyanine group, a squarylium group, an azomethine group, a xanthene group, an oxonol group, or an azo group may be used. Fine particles of the coloring material are included in the adhesive layer 103 in a dispersed state.

The discharge electrodes 220 are disposed parallel to each other on the first substrate 211 facing the second substrate 251. The discharge electrodes 220 generate a discharge in the discharge cells 255, and one common electrode 222 and one scan electrode 221 are included in each of the discharge cells 255. Thus, each of the discharge electrodes 220 functions as the common electrode 222 or the scan electrode 221, and the discharge electrodes 220 have a structure in which the common electrode 222 and the scan electrode 221 are alternately disposed.

The discharge electrodes 220 extend in a horizontal direction (an x direction), and include bus electrodes 221 b and 222b and transparent electrodes 221a and 222a electrically connected to the bus electrodes 221b and 222b, respectively. The transparent electrodes 221a and 222a have a width greater than that of the bus electrodes 22 1 b and 222b, and the bus electrodes 22 1 b and 222b are aligned with the transparent electrodes 221 a and 222a.

The bus electrodes 221b and 222b are usually formed of a metal having high conductivity. Also, since the bus electrodes 221b and 222b are formed in a double layered structure in which at least one layer has a dark color, the bright room contrast of the PDP 200 may be increased due to the bus electrodes 221b and 222b.

The first dielectric layer 212 that covers the discharge electrodes 220 is formed on the first substrate 211. The first dielectric layer 212 prevents the common electrodes 222 and the scan electrodes 221 from being electrically connected, and from being damaged by directly colliding with charged particles or electrons.

The protective layer 213 may be formed of MgO on the first dielectric layer 212. The protective layer 213 prevents the first dielectric layer 212 from being damaged by colliding with positive ions and electrons during a discharge, has high optical transmittance, and generates secondary electrons during discharge. The protective layer 213 is formed as a thin film mainly using sputtering or electron beam deposition.

The address electrodes 252 that cross the common electrodes 222 and the scan electrodes 221 are disposed on the second substrate 251 facing the first substrate 211. The address electrodes 252 generate an address discharge that facilitates a sustain discharge between the common electrodes 222 and the scan electrodes 221. More specifically, the address discharge reduces a voltage to generate the sustain discharge. The address discharge is generated between the scan electrodes 221 and the address electrodes 252.

The second dielectric layer 253 that buries the address electrodes 252 is formed on the second substrate 251. The second dielectric layer 253 is formed of a dielectric layer, and prevents the address electrodes 252 from being damaged by colliding with positive ions or electrons during discharge.

The light emitting phosphor layers 254 are disposed in each of the discharge cells 255. The light emitting phosphor layer 254 is formed by coating phosphor on inner walls of the barrier rib structure 260 and on an upper surface of the second dielectric layer 253 surrounded by the barrier rib structure 260. The light emitting phosphor layer 254 includes red phosphor layers, green phosphor layers, and blue phosphor layers to display a color image. The light emitting phosphor layer 254 emits visible light by being excited by ultraviolet rays generated during discharge.

The discharge cells 255 are filled with a discharge gas formed by mixing neon gas and Xe gas. When the discharge gas is filled in the discharge cells 255, the first substrate 211 and the second substrate 251 are combined with each other using a sealing member such as frit glass formed on edges of the first substrate 211 and the second substrate 251.

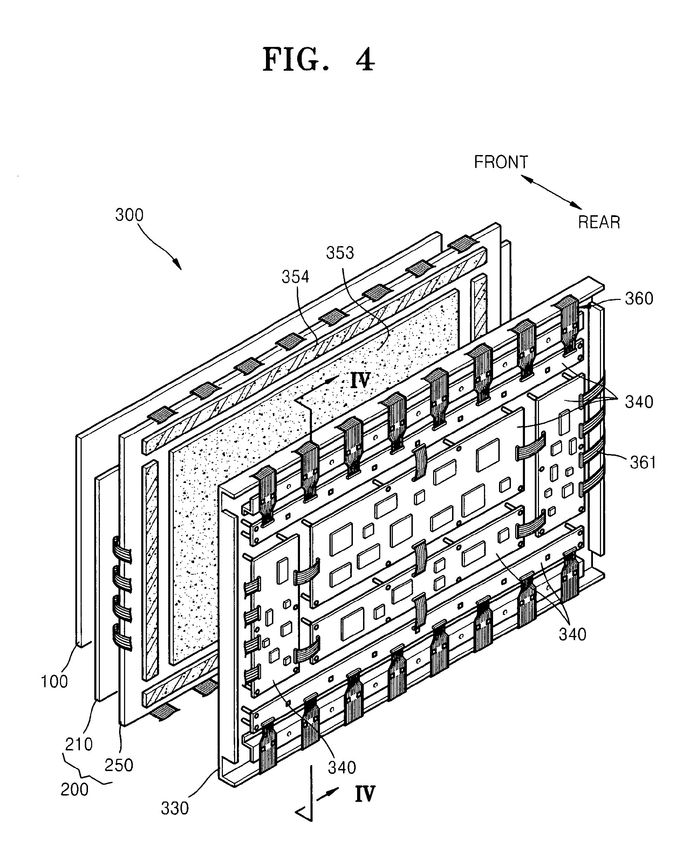

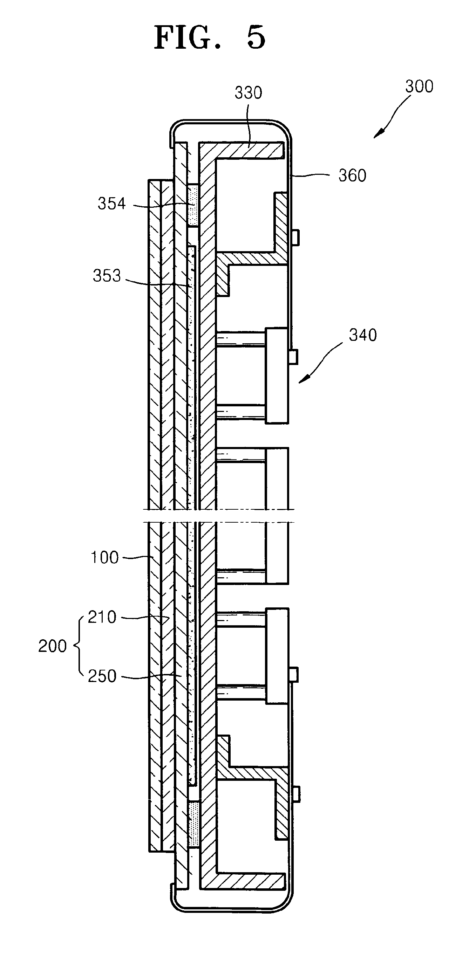

FIG. 4 is an exploded perspective view of a plasma display apparatus 300 having the filter 100, according to an embodiment of the present invention, and FIG. 5 is a cross-sectional view taken along line IV-IV of FIG. 4.

The plasma display apparatus 300 includes the PDP 200, a chassis 330, and a driving circuit substrate 340. The filter 100 according to the present embodiment is attached on a front surface of the PDP 200, while chassis 330 is coupled to a rear surface of the PDP 200. An adhesive member such as a double-sided tape 354 may be used to combine the PDP 200 with the chassis 330, and a thermal conductive member 353 may be disposed between the chassis 330 and the PDP 200 to dissipate heat generated during the operation of the PDP 200. The PDP 200 displays an image by a gas discharge, and includes a first panel 210 and a second panel 250.

The filter 100 may be attached on the front surface of the PDP 200 using an adhesive layer 103. Although, the filter 100 described with reference to FIG. 1 is used in the present embodiment, the present invention is not limited to this and the filter 100 may have other various shapes to which an aspect of the present invention is employed.

Glare may be reduced by the filter 100 and infrared rays or neon light may be blocked by the filter 100.

The chassis 330 is disposed on a rear of the PDP 200 to structurally support the PDP 200. The chassis 330 may be formed of a metal having high strength, such as aluminum or iron, or plastic.

The thermal conductive member 353 is disposed between the PDP 200 and the chassis 330. Also, the double-sided tapes 354 are disposed along edges of the thermal conductive member 353 to fix the PDP 200 with the chassis 330.

Also, the driving circuit substrate 340 that includes circuit wires for driving the PDP 200 is disposed on a rear of the chassis 330. The driving circuit substrate 340 transmits electrical signal to the PDP 200 via signal transmitting members. The signal transmitting members may be a flexible printed cable (FPC), a tape carrier package (TCP), or a chip on film (COF). In the present embodiment, as the signal transmitting members, the FPCs 361 are disposed on left and right sides of the chassis 330, and the TCPs 360 are disposed on upper and lower sides of the chassis 330.

The present invention will now be described in detail with reference to the following experiments. However, the present invention is not limited to the following experiments.

In the following experiments, an aperture ratio of the filter 100 is approximately 70 %, the vertical length V of the discharge cells 255 is approximately 700 µm, and whether moiré patterns occur or not on the PDP was observed by changing the pitch P of the pattern portions formed on the filter for a PDP.

For the first experiment, the filter 100 was manufactured to have a pitch of approximately 5 % of the vertical length V.

For the second experiment, the filter 100 was manufactured to have a pitch of approximately 10 % of the vertical length V.

For the third experiment, the filter 100 was manufactured to have a pitch of approximately 15 % of the vertical length V.

For the first comparative example, the filter 100 was manufactured to have a pitch of approximately 20 % of the vertical length V.

For the second comparative example, the filter 100 was manufactured to have a pitch of approximately 25 % of the vertical length V.

The evaluation results of moiré patterns in each embodiment are shown in Table 1 below.

**Table 1**

| Experiments | Pitch (with respect to V) | Generation of moiré patterns |
|---|---|---|
| First experiment | 5 % | no |
| Second experiment | 10 % | no |
| Third experiment | 15 % | no |
| First comparative example | 20 % | yes |
| Second comparative example | 25 % | yes |

Referring to Table 1, the moiré patterns did not occur when the aperture ratio of the filter was approximately 70 % and the pitch P of the pattern portions was approximately 15 % or less of the vertical length V of the discharge cells. When the vertical length V of the discharge cells is approximately 700 µm and the pitch P of the pattern portions is approximately 100 µm, the pitch P of the pattern portions corresponds to approximately 15 % of the vertical length V of the discharge cells.

However, the moiré patterns occurred when the pitch P of the pattern portions was approximately 20 % or above of the vertical length V of the discharge cells.

In addition, it was observed whether or not moiré patterns occurred on a PDP in which the aperture ratio of the filter is approximately 70 %, the vertical length V of the discharge cells is approximately 740 µm, and the pitch P of the pattern portions is approximately 100 µm, and whether or not moiré patterns occurred on a PDP in which the aperture ratio of the filter is approximately 70 %, the vertical length V of the discharge cells is approximately 1000 µm, and the pitch P of the pattern portions is approximately 100 µm. The moiré patterns did not occur. In the case of the PDP in which the vertical length V of the discharge cells is approximately 740 µm and the pitch P of the pattern portions is approximately 100 µm, the pitch P of the pattern portions corresponds to approximately 13.5 % of the vertical length V of the discharge cells. In the case of the PDP in which the vertical length V of the discharge cells is approximately 1000 µm and the pitch P of the pattern portions is approximately 100 µm, the pitch P of the pattern portions corresponds to approximately 10 % of the vertical length V of the discharge cells.

As described above, pattern portions of a filter block external light, and thus, bright room contrast of a PDP is increased. Also, the occurrence of moiré patterns may be prevented by controlling the pitch of the pattern portions. Thus, the clearness of an image displaying on the PDP may be increased.

## Claims

1. A filter (100) for a plasma display panel that comprises a first (211) and a second substrate (251) facing each other; and a barrier rib structure (260) that is disposed between the first and second substrate and comprises a plurality of first barrier ribs (261) and second barrier ribs (262) that define a plurality of discharge cells by crossing each other, the filter comprising:
a base film (101), and
a plurality of pattern portions (102) disposed on a surface of the base film (101), the pattern portions (102) extending in a direction crossing the second barrier ribs (262)
**characterized in that**
the pattern portions (102) have a pitch of 15% or less of the distance between a center portion of a first barrier rib and a center portion of the adjacent first barrier rib, and that
the plurality of pattern portions (102) are formed of a material which includes a black material that absorbs visible light, the amount of black material being in a range of about 0.1 wt% to about 10 wt% with respect to 100 wt% of the material of the pattern portions.

2. The filter of claim 1, wherein the filter (100) has an aperture ratio no less than about 50 %.

3. The filter of any one of the preceding claims, wherein the plurality of pattern portion (102) have a pitch of about 30 µm to about 120 µm.

4. The filter of any one of the preceding claims, wherein the plurality of pattern portions (102) is disposed extending parallel to the first barrier ribs (261).

5. The filter of any one of the preceding claims, wherein none of the plurality of pattern portions (102) overlaps one of the first barrier ribs (261).

6. The filter of any one of the preceding claims, wherein the plurality of pattern portions (102) extends to perpendicularly cross the second barrier ribs (262).

7. The filter of any one of the preceding claims, wherein the plurality of pattern portions (102) is a plurality of light absorption pattern portions.

8. The filter of any one of the preceding claims, further comprising an adhesive layer (103), disposed on a lower surface of the bass film (101) to attach the base film (101) to the plasma display panel (200).

9. The filter of claim 8, wherein the adhesive layer (103) includes a dye or a pigment.

10. The filter of any one of the preceding claims, wherein the base film (101) is attached to a front surface of the plasma display panel (200), through which light is emitted.

11. The filter of any one of the preceding claims, wherein the plurality of first barrier ribs (261) is a plurality of horizontal barrier ribs and/or
wherein the plurality of second barrier ribs (262) is a plurality of vertical barrier ribs.

12. A plasma display apparatus comprising:
a plasma display panel (200) that displays an image;
a driving circuit substrate (340) that controls supply of driving signals and power to the plasma display panel;
a chassis (330) that supports the plasma display panel (200) and the driving circuit substrate (340), and
a filter of claim 1 that is attached to a front surface of the plasma display panel (200).

13. The plasma display apparatus of claim 12, wherein the chassis is disposed between a rear surface of the plasma display panel (200) and the driving circuit substrate (340).

## Patentansprüche

1. Filter (100) für eine Plasmaanzeigetafel, umfassend ein erstes (211) und ein zweites Substrat (251), die einander zugewandt sind; sowie eine Trennrippenstruktur (260), die zwischen dem ersten und zweiten Substrat angeordnet ist und eine Vielzahl von ersten Trennrippen (261) und zweiten Trennrippen (262) umfasst, die eine Vielzahl von Entladungszellen definieren, indem sie einander kreuzen, wobei der Filter umfasst:
eine Basisschicht (101); und
eine Vielzahl von auf einer Oberfläche der Basisschicht (101) angeordneten Musterbereichen (102), wobei sich die Musterbereiche (102) in eine die zweiten Trennrippen (262) kreuzende Richtung erstrecken,
**dadurch gekennzeichnet, dass**
die Musterbereiche (102) einen Abstand von 15% oder weniger des Abstandes zwischen einem mittleren Bereich einer ersten Trennrippe und einem mittleren Bereich der angrenzenden ersten Trennrippe aufweisen, und dass
die Vielzahl von Musterbereichen (102) aus einem Material gebildet sind, das ein sichtbares Licht absorbierendes schwarzes Material enthält, wobei die Menge des schwarzen Materials in einem Bereich von ca. 0,1 Gewichtsprozent bis ca. 10 Gewichtsprozent bezogen auf 100 Gewichtsprozent des Materials der Musterbereiche liegt.

2. Filter nach Anspruch 1, wobei der Filter (100) ein Öffnungsverhältnis von nicht weniger als ca. 50% aufweist.

3. Filter nach einem der vorangegangenen Ansprüche, wobei die Vielzahl von Musterbereichen (102) einen Abstand von ca. 30 µm bis ca. 120 µm aufweisen.

4. Filter nach einem der vorangegangenen Ansprüche, wobei die Vielzahl von Musterbereichen (102) so angeordnet ist, dass sie sich parallel zu den ersten Trennrippen (261) erstrecken.

5. Filter nach einem der vorangegangenen Ansprüche, wobei keiner der Vielzahl von Musterbereichen (102) eine der ersten Trennrippen (261) überlappt.

6. Filter nach einem der vorangegangenen Ansprüche, wobei sich die Vielzahl von Musterbereichen (102) so erstreckt, dass sie die zweiten Trennrippen (262) senkrecht kreuzt.

7. Filter nach einem der vorangegangenen Anspruche, wobei die Vielzahl von Musterbereichen (102) eine Vielzahl von lichtabsorbierenden Musterbereichen ist.

8. Filter nach einem der vorangegangene Ansprüche, weiterhin umfassend eine Haftschicht (103), die auf einer unteren Oberfläche der Basisschicht (101) angeordnet ist, um die Basisschicht (101) an der Plasmaanzeigetafel (200) zu befestigen.

9. Filter nach Anspruch 8, wobei die Haftschicht (103) einen Farbstoff oder Pigmentfarbstoff enthält.

10. Filter nach einem der vorangegangenen Ansprüche, wobei die Basisschicht (101) an einer Vorderfläche der Plasmaanzeigetafel (200) angebracht ist, durch die Licht emittiert wird.

11. Filter nach einem der vorangegangenen Ansprüche, wobei die Vielzahl von ersten Trennrippen (261) eine Vielzahl von horizontalen Trennrippen ist, und/oder wobei die Vielzahl von zweiten Trennrippen (262) eine Vielzahl von senkrechten Trennrippen ist.

12. Plasmaanzeigevorrichtung umfassend:
eine Plasmaanzeigetafel (200), die ein Bild anzeigt;
ein Treiberschaltungssubstrat (340), das die Zufuhr von Ansteuersignalen und Strom zur Plasmaanzeigetafel steuert;
eine Rahmen (330), der die Plasmaanzeigetafel (200) und das Treiberschaltungssubstrat (340) trägt; und
einen Filter nach Anspruch 1, der an einer Vorderfläche der Plasmaanzeigetafel (200) angebracht ist.

13. Plasmaanzeigevorrichtung nach Anspruch 12, wobei der Rahmen zwischen einer rückwärtigen Fläche der Plasmaanzeigetafel (200) und dem Treiberschaltungssubstrat (340) angeordnet ist.

## Revendications

1. Filtre (100) pour un écran à plasma qui comprend un premier (211) et un second substrat (251) en face l'un de l'autre, et une structure (260) de nervures-barrières qui est disposée entre le premier et le second substrat et qui comprend une pluralité de premières nervures-barrières (261) et de secondes nervures-barrières (262) qui définissent une pluralité de cellules de décharge en se croisant les unes les autres, le filtre comprenant :
un film (101) de base ; et
une pluralité de parties de motif (102) disposée sur la surface du film (101) de base, les parties de motif (102) s'étendant dans une direction croisant les secondes nervures-barrières (262),
**caractérisé :**
**en ce que** les parties de motif (102) ont un pas de 15 %, ou moins, de la distance entre la partie centrale d'une première nervure-barrière et la partie centrale de la première nervure-barrière adjacente ; et
**en ce que** les parties de motif de la pluralité de parties de motif (102) sont faites d'une matière qui inclut une matière noire qui absorbe la lumière visible, la quantité de matière noire étant dans l'intervalle d'environ 0,1 % en poids à environ 10 % en poids par rapport à 100 % en poids de la matière des parties de motif.

2. Filtre selon la revendication 1, ledit filtre (100) ayant un taux d'ouverture non inférieur à 50 %.

3. Filtre selon l'une quelconque des revendications précédentes, dans lequel les parties de motif de la pluralité de parties de motif (102) ont un pas d'environ 30 µm à environ 120 µm.

4. Filtre selon l'une quelconque des revendications précédentes, dans lequel la pluralité de parties de motif (102) est disposée en s'étendant en parallèle aux premières nervures-barrières (261).

5. Filtre selon l'une quelconque des revendications précédentes, dans lequel aucune de la pluralité de parties de motif (102) ne recouvre une des premières nervures-barrières (261).

6. Filtre selon l'une quelconque des revendications précédentes, dans lequel la pluralité de parties de motif (102) s'étend de façon à croiser perpendiculairement les secondes nervures-barrières (262).

7. Filtre selon l'une quelconque des revendications précédentes, dans lequel la pluralité de parties de motif (102) est une pluralité de parties de motif absorbant la lumière.

8. Filtre selon l'une quelconque des revendications précédentes, comprenant en outre une couche adhésive (103) disposée sur la face inférieure du film (101) de base pour fixer le film (101) de base à l'écran (200) à plasma.

9. Filtre selon la revendication 8, dans lequel la couche adhésive (103) inclut un colorant ou un pigment.

10. Filtre selon l'une quelconque des revendications précédentes, dans lequel le film (101) de base est fixé à une face avant de l'écran (200) à plasma, à travers laquelle la lumière est émise.

11. Filtre selon l'une quelconque des revendications précédentes, dans lequel la pluralité de premières nervures-barrières (261) est une pluralité de nervures-barrières horizontales, et/ou
dans lequel la pluralité de secondes nervures-barrières (262) est une pluralité de nervures-barrières verticales.

12. Appareil d'affichage à plasma comprenant :
un écran (200) à plasma qui affiche une image ;
un substrat (340) de circuits d'attaque qui commande la fourniture de signaux d'attaque et de courant à l'écran à plasma ;
un châssis (330) qui supporte l'écran (200) à plasma et le substrat (340) de circuits d'attaque ; et
un filtre selon la revendication 1 qui est fixé à la face avant de l'écran (200) à plasma.

13. Appareil d'affichage à plasma selon la revendication 12, dans lequel le châssis est disposé entre la face arrière de l'écran (200) à plasma et le substrat (340) de circuits d'attaque.
